(19) Europäisches Patentamt
European Patent Office
Office européen des brevets

(11) **EP 2 842 618 A1**

(12) **EUROPEAN PATENT APPLICATION**

(43) Date of publication:
**04.03.2015 Bulletin 2015/10**

(51) Int Cl.:
*B01D 61/50* (2006.01)     *B01D 61/44* (2006.01)
*H01M 2/14* (2006.01)      *H01M 8/22* (2006.01)

(21) Application number: **13182632.3**

(22) Date of filing: **02.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **VITO NV (Vlaamse Instelling voor Technologisch Onderzoek NV)
2400 Mol (BE)**

(72) Inventors:
• ZHANG, Yang
**B-3000 LEUVEN (BE)**
• HELSEN, Joost
**B-2400 MOL (BE)**

(74) Representative: **Pronovem
Office Van Malderen
Avenue Josse Goffin 158
1082 Bruxelles (BE)**

(54) **APPARATUS AND METHOD FOR PRODUCT RECOVERY AND ELECTRICAL ENERGY GENERATION**

(57)     The present invention relates to a diffusion dialysis apparatus (15) comprising a plurality of anion exchange membranes (1,2) arranged so as to form a stack of successive cell units (16), each cell unit comprising a dialysate compartment (4) for collecting acid compounds recovered from a feed, a feed compartment (5) for passing a stream of the feed, and two anion exchange membranes stacked so as to be interleaved with the dialysate compartment and the feed compartment; characterised in that the apparatus comprises an anode (12) and a cathode (13); wherein the cell units are placed between the anode and the cathode and in that successive anion exchange membranes in the stack of successive cell units are alternately a higher proton transport anion exchange membrane (1) and a lower proton transport anion exchange membrane (2).

Use of a diffusion dialysis apparatus according to the invention and a method for recovering acid (or base) compounds from a feed and generating electrical energy is provided as well.

Fig. 3

Printed by Jouve, 75001 PARIS (FR)

**Description**

**Field of the Invention**

The present invention relates to an apparatus, the use thereof, and related method for product recovery by diffusion dialysis and (simultaneously) also generating electrical energy.

More particularly, the present invention relates to recovering, by diffusion dialysis, acid compounds from an acid comprising waste stream and (simultaneously) also generating electrical energy.

Alternatively, the present invention relates to recovering, by diffusion dialysis, base (alkali) compounds from a base (alkali) comprising waste stream and (simultaneously) also generating electrical energy.

**Background of the Invention**

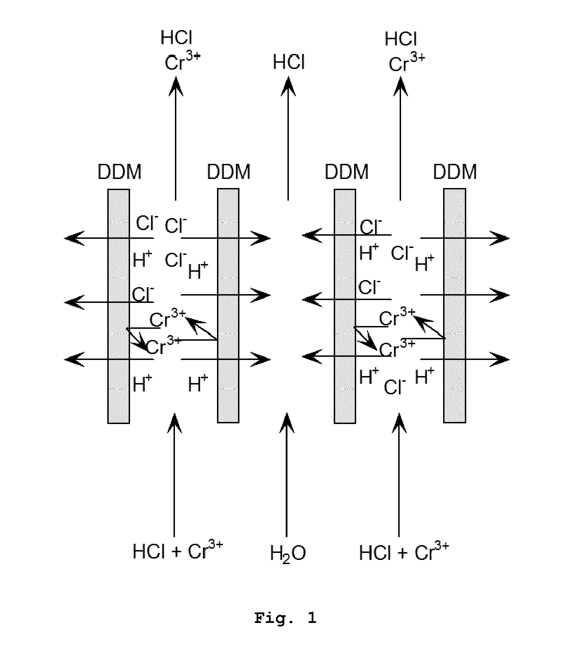

Diffusion dialysis (DD) is an ion-exchange membrane (IEM) separation process driven by concentration gradient. The principle of DD is illustrated in **Figure 1**, which is a schematic diagram for recovery of HCl and $Cr^{3+}$ from an acid waste by using conventional diffusion dialysis. Chlorides ($Cl^-$) pass through the stack of (identical) diffusion dialysis membranes (DDM), in this example being (identical) positively charged anion exchange membranes (AEM), and diffuse from the diluate to the dialysate due to concentration gradient. Meanwhile, protons also pass through the DDM, because of the small size of protons and their high mobility in water, and keep electrical neutrality of the solution. Chromium ions ($Cr^{3+}$) are positively charged and have poor mobility, and are therefore kept in the diluate solution. As such, HCl is recovered in the dialysate.

To date, DD has been used in various industrial applications, such as steel production, metal-refining, electroplating, ion exchange resin regeneration, nonferrous metal smelting, aluminum etching, and tungsten ore smelting, for acid (or base (alkali)) recovery from waste streams, and also for extracting organic acids from fermentation broths, as e.g. described by Luo et al (Journal of Membrane Science 366 (2011) 1-16). Luo et al for example describe that in industries for a variety of metals etching and stripping processes, large quantities of spent liquor are produced during pickling steps. More particularly, it is described that $2x10^5$ to $4x10^5$ kg or ~120 $m^3$ of $H_2SO_4$ (with concentration around 4.5M) waste is produced when one ton titanium white is produced, and $2x10^5$ to $4x10^5$ kg of HF and $HNO_3$ (with concentration around 4M) waste is generated when one ton of titanium material is processed. Such large quantities of acid have to be recovered to meet environmental and economic requirements.

Also various patents describe the recovery of acid (or base) compounds and metal ions from waste liquors by diffusion dialysis processes (e.g. US patent 5,062,960; US patent 4,954,262; US patent 4,765,905; US patent 6,358,484; US patent 5,843,316).

In the DD process, high concentration of acid (or base) diffuses from the diluate compartment to the dialysate compartment, recovering around 1-6 M acid (or base) with a recovery rate of around 80%.

Therefore, DD is regarded as a promising technology to recover acid (base) compounds. Moreover, since this technology has low energy consumption, low installation and operational cost, and almost no environmental pollution. However, DD also has limitations, such as relatively low processing capability and low efficiency. Moreover, although the dilute energy is huge, it cannot be collected using DD, as the $H^+$ ($OH^-$) and the anions (cations) migrate together in the same direction through the same DDM.

Indeed, as shown in **Figure 1**, $H^+$ and $Cl^-$ pass through the same DDM and thus no electrical potential difference can be built up by DD (thus no electricity can be generated).

On the other hand, Reverse Electrodialysis (RED) is designed to generate power from a mixing of a seawater/concentrated brine with fresh water, as described in e.g. EP 1 746 680; US patent 7,736,791; WO 2010/062175.

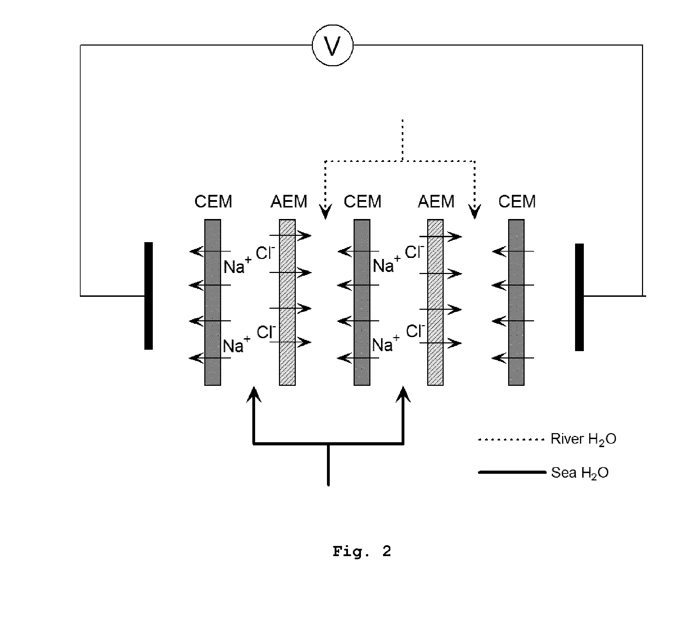

The principle of RED is illustrated in **Figure 2**, where sodium ($Na^+$) is passing through cation exchange membranes (CEM) and chloride ($Cl^-$) is passing through anion exchange membranes (AEM) by diffusion. From the directional migration of the ions and the resulting concentration gradient (of salts), an electrical potential difference is built up across the membranes and electricity can thus be generated.

However, RED applications are highly restricted by the geographic location, i.e., RED systems have to be installed in a location with a mixing of seawater/river water. Another disadvantage is that only NaCl concentration gradient is used in these systems. Moreover, RED is a dilution process, i.e. no useful (chemical) products are produced from this process, more particularly, no acid or base compounds are recovered.

US patent 4,311,771 and WO 2012/061215, for example, describe methods and apparatuses based on a RED configuration, utilizing acid and base streams from industries. More particularly, both AEMs and CEMs are used in the (modified) RED stack, either with or without bipolar membranes, thereby neutralising the acid and base, and producing power from the acid-base diffusion process. However, these processes must use acid and base compounds together, and do not produce useful chemicals either (no recovery of acids nor bases). Indeed, they are acid-base neutralization processes (instead of a dilution process in conventional RED).

**Aims of the Invention**

Aspects of the present invention envisage providing an improved diffusion dialysis apparatus and related method for product recovery by diffusion dialysis, which overcome the disadvantages of prior art apparatuses and methods.

Aspects of the present invention therefore envisage providing such diffusion dialysis apparatuses and methods which allow recovering products from a feed stream (by diffusion dialysis), simultaneously also generating electrical energy.

Aspects of the present invention envisage providing such diffusion dialysis apparatuses and methods which also allow improving the performance of the apparatus and the processing capability of the related method (compared to prior art apparatuses and methods).

Aspects of the present invention envisage providing such diffusion dialysis apparatuses and methods which also allow (further) lowering the total (operational) cost (compared to prior art apparatuses and methods).

**Summary of the Invention**

According to aspects of the invention, there is therefore provided a diffusion dialysis apparatus, as set out in the appended claims.

According to one aspect of the present invention, it is provided a diffusion dialysis apparatus (15) comprising a plurality of anion exchange membranes (1,2) arranged so as to form a stack of successive cell units (16), each cell unit (16) comprising a dialysate compartment (4) configured for collecting acid compounds recovered from a feed, a feed compartment (5) configured for passing a stream of the feed, and two anion exchange membranes (1,2) stacked so as to be interleaved with the dialysate compartment (4) and the feed compartment (5); characterised in that the apparatus comprises an anode (12) and a cathode (13); wherein the cell units (16) are placed between the anode (12) and the cathode (13) and in that successive anion exchange membranes (1,2) in the stack of successive cell units (16) are alternately a higher proton transport anion exchange membrane (1) and a lower proton transport anion exchange membrane (2).

According to another aspect of the present invention, it is provided a diffusion dialysis apparatus (15') comprising a plurality of cation exchange membranes (1', 2') arranged so as to form a stack of successive cell units (16'), each cell unit (16') comprising a dialysate compartment (4') configured for collecting base compounds recovered from a feed, a feed compartment (5') configured for passing a stream of the feed, and two cation exchange membranes (1',2') stacked so as to be interleaved with the dialysate compartment (4') and the feed compartment (5'); characterised in that the apparatus comprises an anode (12') and a cathode (13'); wherein the cell units (16') are placed between the anode (12') and the cathode (13') and in that successive cation exchange membranes (1',2') in the stack of successive cell units (16') are alternately a higher hydroxyl transport cation exchange membrane (1') and a lower hydroxyl transport cation exchange membrane (2').

According to other aspects of the invention, there is provided the use of the diffusion dialysis apparatus of the invention for recovering acid (or base (alkali)) compounds from a feed stream and generating electrical energy (by diffusion dialysis), as set out in the appended claims.

According to other aspects of the invention, there is provided a method for recovering acid (or base (alkali)) compounds from a feed stream and generating electrical energy (by diffusion dialysis), as set out in the appended claims.

Advantageous aspects of the present invention are set out in the dependent claims.

**Short Description of the Drawings**

Aspects of the invention will be described in more detail with reference to the appended drawings, wherein same reference numerals illustrate same features. In the drawings, not all alternatives and options are shown and therefore the invention is not limited to the content of the given drawings.

**Figure 1** represents a prior art conventional diffusion dialysis (DD) stack.

**Figure 2** represents a prior art conventional reverse electrodialysis (RED) stack.

**Figure 3** represents a multi-compartment stack according to an aspect of the present invention, for recovering acid compounds from a feed stream.

**Figure 4** represents a multi-compartment stack according to an aspect of the present invention, for recovering base (or alkali) compounds from a feed stream.

**Figure 5** shows an example of a stack comprising six compartments, according to an aspect of the present invention, for recovering acid compounds from a feed stream.

## Description of the Invention

In the context of the present invention, an ion exchange membrane (IEM) refers to a permselective membrane comprising electrically charged functional sites of a specific charge type, typically arranged in interstices, and which have the ability to allow particular ions diffusing through the interstices while rejecting others, at least based on their charge type (positive or negative). It will be convenient to note that, typically, an ion-exchange membrane is not fully permselective, but nevertheless can have high permselectivity (e.g. 98 % or higher). Typically, ion exchange membranes do not have an interconnected porosity, which makes ion exchange membranes not suitable for separation of compounds from a fluid based solely on particle size.

In the context of the present invention, an ion exchange membrane can refer to an anion exchange membrane (AEM), or a cation exchange membrane (CEM). An anion exchange membrane refers to an ion exchange membrane (IEM) having positively charged functional sites (e.g. quaternary ammonium groups) only allowing anions through it. Similarly, a cation exchange membrane refers to an ion exchange membrane having negatively charged functional sites (e.g. sulfonate groups) only allowing cations through it. It will be convenient to note that the terms anion exchange membrane and cation exchange membrane as used in the present description can refer to such exchange membranes being selective for a particular anion or cation respectively. Moreover, depending on the proton transport property of a given anion exchange membrane, protons can possibly pass through the AEM, due to their small size, low valence state and high mobility, although $H^+$ being positively charged. Likewise, depending on the hydroxyl transport property of a given cation exchange membrane, hydroxyl anions can possibly pass through the CEM, although $OH^-$ being negatively charged. Ions having the opposite sign compared to the charge of the IEM are referred to as counter-ions. Co-ions are ions having the same sign as the charge of the IEM.

In the context of the present invention, feed stream refers to a solution flowing through at least every second compartment 5, 5' (of the stack of the apparatus of the present invention), referred to as feed compartments (or diluate compartments). In the present description, feed stream is also referred to as feed, feed solution, diffusate, diffusate solution, diluate, or diluate solution.

In the context of the present invention, dialysate stream refers to a solution flowing through at least every second compartment 4, 4' (of the stack of the apparatus of the present invention), referred to as dialysate compartments (or recovery compartments). In the present description, dialysate stream is also referred to as dialysate, or dialysate solution.

In the context of the present invention, dialysate compartments refer to recovery compartments (4, 4'), whereas diffusate compartments refer to feed compartments (or diluate compartments) (5, 5').

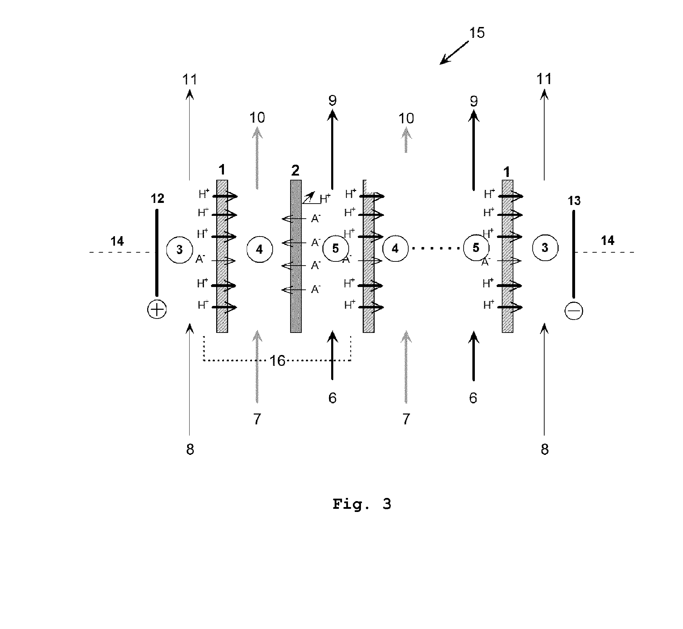

Referring to **Figure 3**, a diffusion dialysis apparatus 15 according to aspects of the invention comprises a plurality of (positively charged) anion exchange membranes (AEM) 1, 2 forming a stack of successive (or consecutive) compartments (or cells) 4, 5. The successive compartments 4, 5 are separated from each other by one of the plurality of AEMs 1, 2. As shown in **Figure 3**, the apparatus (or system or module) of the invention comprises a (positive) anode 12 and a (negative) cathode 13, the AEMs 1, 2 (or stack of compartments) being placed in between. More particularly, in apparatuses according to the invention as illustrated in **Figure 3**, successive AEMs 1, 2 are alternately a higher proton transport anion exchange membrane 1 and a lower proton transport anion exchange membrane 2 (when compared to each other). More particularly, in the apparatus of the invention, the transport of protons through the higher proton transport AEM 1 is higher when compared to the transport of protons through the lower proton transport AEM 2, under same conditions. In other words, the higher proton transport AEM 1 has a first $H^+$ transport number and the lower proton transport AEM 2 has a second $H^+$ transport number, the second $H^+$ transport number being smaller (or lower) than the first $H^+$ transport number, when considered under given (same) circumstances. Advantageously, in the apparatus of the invention, the higher proton transport AEM 1 is configured for transporting anions along with protons through the AEM 1, while the lower proton transport AEM 2 is a (so-called) proton blocking membrane configured for only transporting anions through the AEM 2 and for substantially blocking protons.

In the context of the present invention, transport number refers to a ratio (of transported charges) of transporting a specific ion with respect to the total ions (with the same charge sign, present in the solution). Suitable methods for measuring the transport number are known to those skilled in the art.

Advantageously, the specific membrane resistance for the anion passing the AEMs 1, 2 is lower than (about) 500 $\Omega$cm.

Advantageously, the areal membrane resistance for the anion passing the AEMs 1, 2 is lower than (about) 10 $\Omega$cm$^2$.

Suitable methods for measuring the (specific or areal) membrane resistance are known to those skilled in the art.

Advantageously, the AEMs 1, 2 have a transport number for the anion (counter-ion) passing the membrane being higher than 0.5, advantageously being comprised between (about) 0.7 and (about) 1. Suitable methods for measuring the transport number of the counter-ion are known to those skilled in the art.

Advantageously, the AEMs 1 have a $H^+$ transport number being higher than 0.5. Advantageously, the AEMs 2 have a $H^+$ transport number being lower than 0.5. Suitable methods for measuring the $H^+$ transport number will be apparent to those skilled in the art.

Advantageously, the thickness of the AEMs 1, 2 is comprised between (about) 10 and (about) 500 $\mu$m, advantageously is lower than (about) 200$\mu$m.

Suitable higher proton transport AEMs 1 and lower proton transport AEMs 2 for use in the apparatuses of the invention are known to those skilled in the art. Examples of commercially available, higher proton transport AEMs 1 are diffusion dialysis membranes (DDM) DF-120 (Tianwei, China) and FAD (FuMA-Tech GmbH, Germany). An example of a commercially available, lower proton transport AEM 2 is proton blocker membrane FAB (FuMA-Tech GmbH, Germany).

As illustrated in **Figure 3**, an apparatus according to the present invention comprises a stack of successive cell units 16 (illustrated by the dashed box in **Figure 3**); each cell unit 16 comprising a recovery compartment 4 (or dialysate compartment) configured for collecting acid compounds recovered from a feed (comprising acid waste), a feed compartment 5 configured for passing a stream of the feed (comprising acid waste), and two successive anion exchange membranes 1, 2. The successive AEMs 1, 2 are interleaved with the recovery compartment 4 and the (successive) feed compartment 5. The recovery compartment 4 and the feed compartment 5 alternate in the stack between the anode 12 and the cathode 13.

According to an aspect of the present invention, a stack as in apparatus 15 shown in **Figure 3** can be used for recovering acid compounds from a feed (by diffusion dialysis) and simultaneously generating electrical energy. More particularly, the recovered acid compounds comprise monovalent anions or multivalent anions (such as divalent or trivalent anions). Advantageously, the recovered acid compounds comprise HCl, HF, $HNO_3$, $H_2SO_4$, $H_3PO_4$, or (small) organic acids (such as formic acid, or acetic acid).

As already described above, **Figure 3** shows a stack of N repeating cell units 16, representing a multi-compartment stack according to an aspect of the present invention. As illustrated in **Figure 3**, high proton transport AEMs 1 and low proton transport AEMs 2 are arranged (in parallel), possibly with spacers in between (not shown here). Due to such successive (consecutive) arrangement of N unit cells, the recovery compartment 4 and the feed compartment 5 alternate in the stack between the anode 12 and the cathode 13.

In a method of the invention, a (initial) feed stream of spent acid (solution) 6 with impurities (or feed influent, comprising acid waste) flows through feed compartments 5 and a (initial) stream of dialysate solution 7 (or dialysate influent, or acid recovery stream influent) flows through recovery compartments 4, with a concentration gradient (of the acid) between the waste solution and the dialysate solution. Due to the concentration gradient (of the ions across the membranes), anions ($A^-$) (present in the feed stream 6) pass from the feed compartment 5 through the low proton transport AEM 2 to the acid recovery compartment 4 (in the direction of the positive anode 12). Anions (present in the feed stream 6) also pass through the high proton transport AEM 1 to the acid recovery compartment 4 (in the direction of the negative cathode 13). Moreover, protons (present in the feed stream 6) are also permitted passage, along with the anions, from the feed compartments 5 through the high proton transport AEM 1 to the acid recovery compartment 4 (in the direction of the negative cathode 13), due to the small $H^+$ size, their low valence state and high mobility (although $H^+$ being positively charged) and the high $H^+$ transport property of this AEM 1. However, protons are much less likely to pass, or even do not substantially pass, from the feed compartments 5 through the low proton transport AEM 2 (in the direction of the positive anode 12), due to the low proton transport properties of this AEM 2 (AEM 2 substantially blocking protons). Meanwhile, the (cationic) impurities in the feed, such as (heavy) metals (e.g. $Cr^{3+}$), which are comparatively large relative to the protons and positively charged, do not pass these anion exchange membranes 1 or 2 and hence are rejected, and remaining in the feed effluent 9. This thus results in acid depleted (metal-bearing) compartments 5 and acid-recovered dialysate compartments 4 (collecting acid compounds from the feed influent (or feed stream) 6). The feed effluent 9 can be further processed (through adequate means) for purification or neutralization, while the recovered (collected) acid in the dialysate effluent 10 can be re-used.

According to the invention, acid compounds are recovered in the dialysate effluent 10. Simultaneously, an electrical potential is built up through the stack due to the directional migration (by diffusion dialysis) of the protons and anions. According to the invention, electricity can thus be generated.

It will be convenient to note that the processes and apparatuses according to the invention fundamentally differ from those already described in prior art. Indeed, in the apparatuses and related processes already described in the art, a stack of successive, identical ion exchange membranes (thus IEMs of the same type, having the same charge and the same ion transport properties) are placed in a stack. As illustrated in **Figure 1** for example, in a stack of positively charged, identical DDMs (AEMs), anions and protons (present in a feed stream) are passing together through the DDMs due to the concentration gradient across the membranes, and acid compounds can be recovered, but no net flow of protons (and as a consequence, no electrical energy) is generated. Moreover, it is convenient to note that in a DD apparatus described in prior art, no anode and cathode is present.

It will be convenient to note that the high $H^+$ transport property of AEM 1 versus the low $H^+$ transport property of AEM 2 is a key to the apparatus and method according to the present invention.

In the present invention, electrode rinsing solution influent 8 and effluent 11 is used to rinse the anode 12 and the cathode 13 and electricity conductive wires 14 are connected from the stack with a piece of electricity consumption equipment. By providing a load (not shown) between the anode 12 and the cathode 13 of the diffusion dialysis apparatus of the invention as illustrated in **Figure 3**, the generated electrical energy (electricity) is harnessed.

Carrying out a method according to the invention, acid compounds are thus recovered from a feed stream (comprising acid waste), simultaneously also generating electrical energy (or electric power, or electricity).

It will be convenient to note that alternatively, a stack as in apparatus 15 shown in **Figure 3** with the plurality of anion exchange membranes 1, 2 being substituted by cation exchange membranes 1', 2' is also possible in an analogous way. This requires the (positive) anode 12' to be placed at the right hand side and the (negative) cathode 13' to be placed at the left hand side, compared to the stack of **Figure 3**.

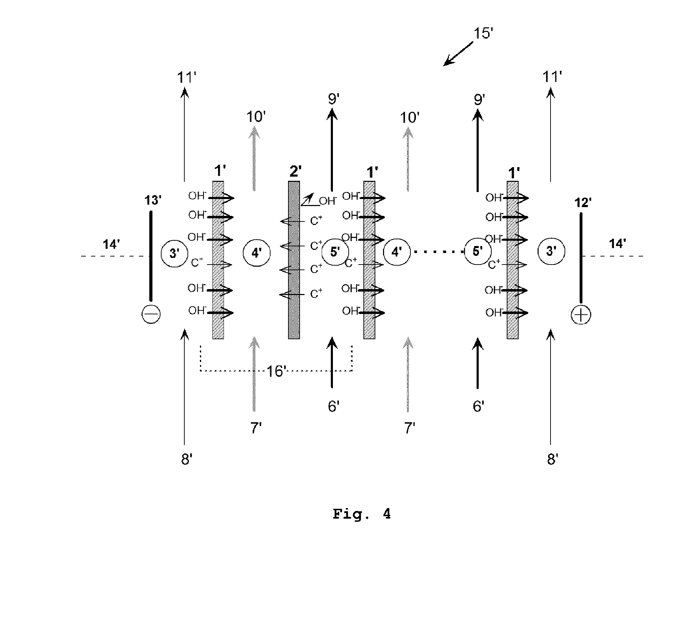

**Figure 4** is showing such an alternative stack in a diffusion dialysis apparatus 15' according to aspects of the invention, comprising a plurality of (negatively charged) cation exchange membranes (CEM) 1', 2' forming a stack of successive (or consecutive) compartments (or cells) 4', 5'. The successive compartments 4', 5' are separated from each other by one of the plurality of CEMs 1', 2'. As shown in **Figure 4**, the apparatus (or system or module) of the invention comprises a (positive) anode 12' and a (negative) cathode 13', the CEMs 1', 2' (or stack of compartments) being placed in between. In apparatuses according to the invention as illustrated in **Figure 4**, successive CEMs 1', 2' are alternately a higher hydroxyl transport cation exchange membrane 1' and a lower hydroxyl transport cation exchange membrane 2' (when compared to each other). More particularly, in the apparatus of the invention, the transport of hydroxyls (hydroxyl ions) through the higher hydroxyl transport CEM 1' is higher when compared to the transport of hydroxyls through the lower hydroxyl transport CEM 2', under same conditions. In other words, the higher hydroxyl transport CEM 1' has a first OH$^-$ transport number and the lower hydroxyl transport CEM 2' has a second OH$^-$ transport number, the second OH$^-$ transport number being smaller (or lower) than the first OH$^-$ transport number, when considered under given (same) circumstances. Advantageously, in the apparatus of the invention, the higher hydroxyl transport CEM 1' is configured for transporting cations along with hydroxyls through the CEM 1', while the lower hydroxyl transport CEM 2' is a (so-called) hydroxyl blocking membrane configured for only transporting cations through the CEM 2' and for substantially blocking hydroxyls.

Advantageously, the specific membrane resistance for the cation passing the CEMs 1', 2' is lower than (about) 500 $\Omega$cm.

Advantageously, the areal membrane resistance for the cation passing the CEMs 1', 2' is lower than (about) 10 $\Omega$cm$^2$.

Suitable methods for measuring the (specific or areal) membrane resistance will be apparent to those skilled in the art.

Advantageously, the CEMs 1', 2' have a transport number for the cation (counter-ion) passing the membrane being higher than 0.5, advantageously being comprised between (about) 0.7 and (about) 1. Suitable methods for measuring the transport number of the counter-ion will be apparent to those skilled in the art.

Advantageously, the CEMs 1' have a OH$^-$ transport number being higher than 0.5. Advantageously, the CEMs 2' have a OH$^-$ transport number being lower than 0.5. Suitable methods for measuring the OH$^-$ transport number will be apparent to those skilled in the art.

Advantageously, the thickness of the CEMs 1', 2' is comprised between (about) 10 and (about) 500 $\mu$m, advantageously is lower than (about) 200$\mu$m.

Suitable higher hydroxyl transport CEMs 1' and lower hydroxyl transport CEMs 2' for use in the apparatuses of the invention will be apparent to those skilled in the art. By example, a commercially available, higher hydroxyl transport CEM 1' is diffusion dialysis membrane (DDM) FKD (FuMA-Tech GmbH, Germany). By example, a commercially available, lower hydroxyl transport CEM 2' is hydroxyl blocker membrane FKB (FuMA-Tech GmbH, Germany).

Advantageously, the membranes (AEM 1, 2 and CEM 1', 2') in the apparatuses of the invention are spiral wound, flat sheets, hollow fibers, or tubular. More advantageously, the membranes are spiral wound or flat sheets.

As illustrated in **Figure 4**, an apparatus according to the present invention, comprises a stack of successive cell units 16' (illustrated by the dashed box in Figure 4); each cell unit 16' comprising a recovery compartment 4' (or dialysate compartment) configured for collecting base compounds recovered from a feed (comprising base waste), a feed compartment 5 configured for passing a stream of the feed (comprising base waste), and two successive cation exchange membranes 1', 2'. The successive CEMs 1', 2' are interleaved with the recovery compartment 4' and the (successive) feed compartment 5'. The recovery compartment 4' and the feed compartment 5' alternate in the stack between the anode 12' and the cathode 13'.

According to an aspect of the present invention, a stack as in apparatus 15' shown in **Figure 4** can be used for recovering base (alkali) compounds from a feed (by diffusion dialysis) and simultaneously generating electrical energy. Advantageously, the recovered base compounds comprise NaOH, KOH, or NH$_4$(OH).

As already described above, **Figure 4** shows an alternative stack of N repeating cell units 16', representing a multi-compartment stack according to another aspect of the present invention. As illustrated in this **Figure 4**, high hydroxyl transport CEMs 1' and low hydroxyl transport CEMs 2' are arranged (in parallel), possibly with spacers in between (not shown here). Due to such successive (consecutive) arrangement of N unit cells, the recovery compartment 4' and the feed compartment 5' alternate in the stack between the anode 12' and the cathode 13'.

In a method of the invention, a (initial) feed stream of spent alkali (solution) 6' with impurities (or feed influent, comprising alkali waste) flows through feed compartments 5' and a (initial) stream of dialysate solution 7' (or dialysate influent, or alkali recovery stream influent) flows through recovery compartments 4', with a concentration gradient (of the alkali) between the waste solution and the dialysate solution. Due to the concentration gradient (of the ions across the membranes), cations $(C^+)$ (present in the feed stream 6') pass from the feed compartment 5' through the low hydroxyl transport CEM 2' to the alkali recovery compartment 4' (in the direction of the negative cathode 13'). Cations (present in the feed stream 6') also pass through the high hydroxyl transport CEM 1' to the alkali recovery compartment 4' (in the direction of the positive anode 12'). Moreover, hydroxyl ions (present in the feed stream 6') are also permitted passage, along with the cations, from the feed compartments 5' through the high hydroxyl transport CEM 1' to the alkali (base) recovery compartment 4' (in the direction of the positive anode 12'), due to the high $OH^-$ transport property of this CEM 1' (although $OH^-$ being negatively charged). However, hydroxyl anions are much less likely to pass, or even do not substantially pass, from the feed compartments 5' through the low hydroxyl transport CEM 2' (in the direction of the negative cathode 13'), due to the low hydroxyl transport properties of this CEM 2' (CEM 2' substantially blocking hydroxyls). Meanwhile, the (anionic) impurities in the feed, such as $SO_4^{2-}$ or $Cl^-$ in NaOH solution, which are comparatively large relative to the hydroxyl anions and negatively charged, do not pass these cation exchange membranes 1' or 2' and hence are rejected, and remaining in the feed effluent 9'. This thus results in alkali depleted compartments 5' and alkali-enriched dialysate compartments 4' (collecting alkali compounds from the feed influent (or feed stream) 6). The feed effluent 9' can be further processed (through adequate means) for purification or neutralization, while the recovered (collected) base (alkali) in the dialysate effluent 10' can be re-used.

According to the invention, base compounds are recovered in the dialysate effluent 10'. Simultaneously, an electrical potential is built up through the stack due to the directional migration (by diffusion dialysis) of the hydroxyls and cations. According to the invention, electricity can thus be generated.

It will be convenient to note that the processes and apparatuses according to the invention fundamentally differ from those already described in prior art. Indeed, in the apparatuses and related processes already described in the art, a stack of successive, identical ion exchange membranes (thus IEMs of the same type, having the same charge and the same ion transport properties) are placed in a stack. For example, in a stack of negatively charged, identical DDMs (CEMs), cations and hydroxyls (present in a feed stream) are passing together through the DDMs due to the concentration gradient across the membranes, and base compounds can be recovered, but no net flow of hydroxyls (and as a consequence, no electrical energy) is generated. Moreover, as already mentioned above, it is convenient to note that in a DD apparatus described in prior art, no anode and cathode is present.

It will be convenient to note that the high $OH^-$ transport property of CEM 1' versus the low $OH^-$ transport of CEM 2' is a key to the method according to the present invention.

In the present invention, electrode rinsing solution influent 8' and effluent 11' is used to rinse the anode 12' and the cathode 13' and electricity conductive wires 14' are connected from the stack with an electricity consumption equipment. By providing a load (not shown) between the anode 12' and the cathode 13' of the diffusion dialysis apparatus of the invention as illustrated in **Figure 4**, the generated electrical energy (electricity) is harnessed.

Carrying out a method according to the invention, base compounds are thus recovered from a feed stream (comprising alkali waste), simultaneously also generating electrical energy (or electric power, or electricity).

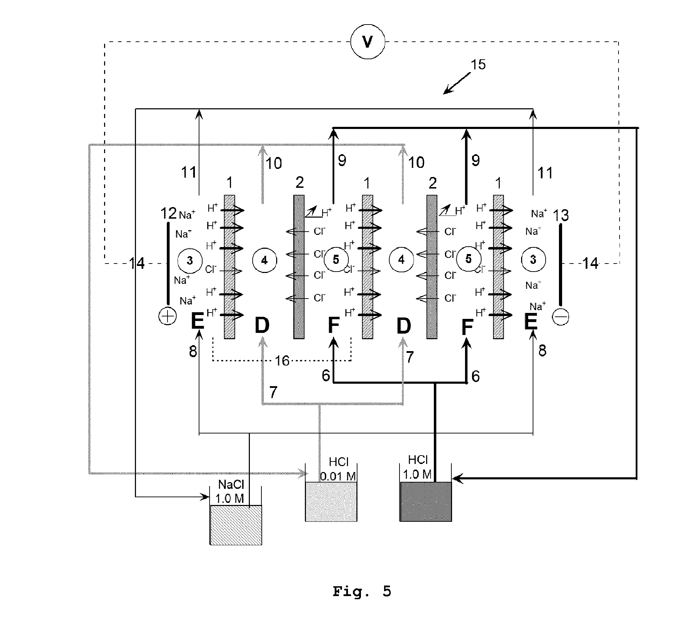

In **Figure 5**, a stack of two cell units 16 according to an aspect of the present invention is shown for illustrative purposes. Advantageously, the stack comprises a multiple (or multitude) of such (parallel disposed) (successive) cell units 16, advantageously at least fifty cell units, advantageously at least one hundred cell units.

In a stack of the invention comprising such a multiple of (successive) cell units 16 (16') (disposed in parallel), the recovery compartments 4 (4') and the feed compartments 5 (5') alternate in the stack.

Advantageously, an apparatus of the invention, illustrated in **Figure 3**, comprises a first electrode rinsing compartment 3 interposed between the (positive) anode 12 and a higher proton transport AEM 1, and a second electrode rinsing compartment 3 interposed between a higher proton transport AEM 1 and the (negative) cathode 13. Alternatively, an apparatus of the invention, illustrated in **Figure 4**, comprises a first electrode rinsing compartment 3' interposed between the (positive) anode 12' and a higher hydroxyl transport CEM 1', and a second electrode rinsing compartment 3' interposed between a higher hydroxyl transport CEM 1' and the (negative) cathode 13'.

The electrode rinsing compartments can be interconnected to form a circulation loop and allow an electrode rinsing solution 8 (8'), such as NaCl, to (re)circulate in (between) the electrode rinsing compartments 3 (3') so as to guarantee an ionic conductivity in the stack. The electrode rinsing solution 8 (8') is advantageously an aqueous solution providing the following reactions:

at the anode side: $2H_2O \rightarrow 4H^+ + O_2 + 4e^-$ ;
at the cathode side: $2e^- + 2H_2O \rightarrow H_2 + 2OH^-$ .

Advantageously, in an apparatus of the invention the electrode material does not take part in these reactions. Advantageously, the electrode material is corrosion resistant.

Advantageously, in an apparatus of the invention the anode material comprises (or is made of) titanium, platinum, or carbon based material such as graphite, graphene, or activated carbon. Advantageously, the cathode material comprises (or is made of) titanium, platinum, or carbon based material such as graphite, graphene, or activated carbon.

Advantageously, in an apparatus of the invention the electrodes allow for high current density.

Advantageously, in an apparatus of the invention the anode and the cathode are dimensionally stable electrodes (e.g. a dimensionally stable anode (DSA)).

More advantageously, by using dimensionally stable electrodes in an embodiment of the invention, a suitable redox-couple is chosen, as the activation overpotential of the electrodes should be low (i.e. lower than 10% of the generated potential of the stack). As such, redox-couples are chosen in such way that reduced and oxidised electrolyte species (from the electrode rinsing solution) can be re-used at the respective electrodes.

Suitable electrodes for use in an apparatus of the invention will be apparent to those skilled in the art.

Advantageously, in an apparatus of the invention as illustrated in **Figure 3** (**Figure 4**), the feed compartment 5 (5') comprise a fluid inlet (input) for the feed influent 6 (6') and a fluid outlet (output) for the feed effluent 9 (9'). Advantageously, the recovery compartment 4 (4') comprises a fluid inlet (input) for the dialysate influent 7 (7') and a fluid outlet (output) for the dialysate effluent 10 (10'). Advantageously, the electrode rinsing compartment 3 (3') comprises a fluid inlet (input) for the electrode rinsing solution influent 8 (8') and a fluid outlet (output) for the electrode rinsing solution effluent 11 (11').

Advantageously, in an apparatus of the invention the solutions in the compartments 4 and 5 (4' and 5') are flowing in a concurrent mode, a counter-current mode, or a cross-flow mode with respect to each other, more advantageously the solutions in the compartments 4 and 5 (4' and 5') are flowing in a cross-flow mode relative to each other.

Advantageously, an apparatus of the invention comprises pump means for generating fluid flows to the inlets (inputs).

Advantageously, the compartments (or cells) in a stack of the invention comprise a spacer.

By using spacers in an embodiment of the invention, adjacent membranes are kept at a distance to form the compartments between the membranes. Furthermore, spacers contribute to the pressure drop over the device.

More advantageously, the spacers show low hydraulic resistance, in order to ensure low pressure drops over the inlet and outlet of the compartments, and to achieve higher net-power density for the system.

More advantageously, the thickness of the spacers is lower than (about) 500 $\mu$m, more advantageously is lower than (about) 200 $\mu$m.

More advantageously, the material of the spacers is resistant to the composition of the feed stream.

A diffusion dialysis apparatus according to the invention can be used with the concentration of the feed influent (or initial feed stream) 6 (6') being higher than the concentration of the dialysate influent (or initial dialysate stream) 7 (7') by a ratio of 1 to 0.01 (1:0.01).

Finding a suitable electrode rinsing solution 8 (8') for use in a method and apparatus according to the present invention is well within the practice of those skilled in the art.

As illustrated in **Figure 3** (**Figure 4**), the flow of the solutions in compartments 4 and 5 (4' and 5') in a method of the invention is concurrent relative to each other. However, other types of flow configurations, such as countercurrent or cross-flow, are possible as well. Advantageously, the solutions in the compartments 4 and 5 (4' and 5') are flowing in a cross-flow mode.

In an embodiment according to (a method and apparatus of) the invention, the feed compartments 5 (5'), the dialysate compartments 4 (4'), or the electrode rinsing compartments 3 (3') can be interconnected to form a (closed, continuous) circulation loop between the feed influent 6 (6') and the feed effluent 9 (9'), between the dialysate influent 7 (7') and the dialysate effluent 10 (10'), or between the electrode rinsing solution influent 8 (8') and the electrode rinsing solution effluent 11 (11'), respectively, as shown in **Figure 5**. Alternatively, the flows in the feed compartments, the dialysate compartments, or the electrode rinsing compartments can be provided in so-called "feed and bleed" flows.

Advantageously, in a method of the invention, the feed influent (or initial stream of feed) 6 (6') and the dialysate influent (or initial stream of dialysate) 7 (7') are supplied (using pump means for generating fluid flows) to the respective inlets at a flow ratio of 0.01 to 100.

Advantageously, in a method of the invention, the concentration of the feed influent (or initial feed stream) 6 (6') is higher than the concentration of the dialysate influent (or initial dialysate stream) 7 (7') by a ratio of 1 to 0.01 (1:0.01).

## EXAMPLES

### Example 1: Measuring OCV using the stack of Figure 5

**Figure 5** shows an example (schematic diagram) of a stack used for recovering acid compounds from a feed stream, the stack comprising two repeating unit cells 16 forming thus six compartments. More particularly, three diffusion dialysis membranes DF-120 (high proton transport AEMs 1) and two proton blocker membranes FAB (low proton transport AEMs 2) were installed in this system which configured two electrode rinsing compartments 3, two dialysate compartments 4, and two feed compartments 5. A multi-meter was used to measure the voltage across this stack by putting the probes 14 in the anode 12 and cathode 13. Initial feed was 1.0 M HCl, initial dialysate was 0.01 M HCl and initial electrode rinsing solution was 1.0 M NaCl. The liquids were pumped and recirculated in three closed loops by peristaltic pumps with a flow rate of 30 Lh$^{-1}$. An open circuit voltage (OCV) of 40 mV was measured by the multi-meter from this example, which is a comparable value with the voltage measured from a well-designed reverse electrodialysis stack by applying 1.0 M NaCl in the diluate and 0.01 M NaCl in the concentrate (around 2.6 V by using 50 cell pairs, corresponding to around 50 mV per cell pair). The flow rates in the different compartments were varied from 0 ml/min to 450 ml/min to around 800 ml/min. A clear increase in the OCV was measured. Without circulation of flows in the compartments, the OCV dropped almost instantly to 0V. At 450 ml/min, the OCV was around 30mV and the OCV was above 40mV at the highest flow rate. This clearly indicates that the process involved is limited by diffusion layer effects at the membranes. The example shows that increasing flow rates lead to lower diffusion layer thickness, hence higher concentration gradient of the ions across the membranes, and consequently higher OCV.

In accordance with one or more embodiments of the invention, the electrical energy possibly drawn from a stack of the invention may be calculated, as explained in the Appendix.

## Example 2: Recovering acid compounds from a waste stream and (simultaneously) generating electrical energy

Considering a waste acid feed stream from titanium oxide production industry, said waste stream comprising 70g/L HCl, 12g/L Fe, 7.3g/L Zr, and other metal ions.

By using a method of the invention as described above and a 100mmx900mm stack of the invention with 100 membrane cell units, 1000 Liter (L) of this waste stream can be treated per day with the energy production of 1 MJ. Meanwhile, more than 80% of the acid (HCl) can be recovered and more than 90% of the metal ions in the waste stream are retained in the feed for further recovery.

Using a method and apparatus of the invention, around 1MJ energy can thus be generated per 1000L of waste (stream), while around 80% acids can be recovered (from a waste acid feed stream), which can be re-used for further industrial processes. Moreover, as only around 20% of acid is retaining in the feed stream, only around 20% base is needed to further neutralise this stream. Using a method and apparatus of the invention, the total (operational) cost can thus be (further) reduced, compared to prior art apparatuses and methods, while simultaneously electrical energy is generated.

## Example 3: Recovering base (or alkali) compounds from a waste stream and (simultaneously) generating electrical energy

Considering a waste base (alkali) feed stream from petroleum industry comprising 50 g/L NaOH, 10 g/L NaHS, 20 g/L $Na_2CO_3$ and 0.5 g/L oil (as TOC).

By using a method of the invention as described above and a 100mmx900mm stack of the invention with 100 membrane cell units, 1000 Liter of this waste stream can be treated per day with the energy production of 0.5 MJ. Meanwhile, more than 60% of the alkali (NaOH) can be recovered (from a waste base feed stream) and more than 90% of the impurity anions and TOC are retained in the feed for further recovery. Moreover, as only around 40% of base is retaining in the feed stream, only around 40% acid is needed to further neutralise this stream. Using a method and apparatus of the invention, the total (operational) cost can thus be (further) reduced, compared to prior art apparatuses and methods, while simultaneously electrical energy is generated.

## Example 4: Comparative example

The same acid waste feed stream as in **Example 2** is considered, but said waste stream now being neutralized by adding (about) 77g/L NaOH (or (about) 95g/L Ca(OH)$_2$, depending on the industrial application) prior to performing a treatment by nanofiltration.

In this example, around 80g/L of NaOH has thus to be spent to neutralize the acid waste stream, whereas by using the method of the present invention in **Example 2**, only 16g/L of NaOH is needed, as in **Example 2** only (less than) 20% of the acid (HCl) is retained in the feed stream.

As such, in the present **Example 4**, a huge amount of chemicals is consumed (when compared to a method of the present invention illustrated in **Example 2**). Moreover, in this **Example 4**, the acid in the feed stream cannot be recovered, and no electricity can be generated.

To the contrary, using a method and apparatus of the invention, up to 80% base can thus be saved (cf. **Example**

2) (further) reducing the total (operational) cost compared to prior art apparatuses and methods, while simultaneously also electrical energy is generated.

From the description and the examples above, it follows that the present invention thus provides an improved diffusion dialysis apparatus and related method for product recovery by diffusion dialysis, which overcome the disadvantages of prior art apparatuses and methods.

In particular, the present invention provides diffusion dialysis apparatuses and methods having the advantage that products are recovered from a feed stream (by diffusion dialysis), simultaneously also generating electrical energy.

Furthermore, the present invention provides diffusion dialysis apparatuses and methods for which the performance of the apparatus and the processing capability of the related method are improved compared to prior art apparatuses and methods.

Moreover, the present invention provides diffusion dialysis apparatuses and methods having the advantage that the total (operational) cost is (further) lowered compared to prior art apparatuses and methods.

**Appendix: Theoretical calculation of power generation**

The osmotic pressure of an ideal solution with low concentration can be approximated by the following equation:

$$\pi = iMRT \qquad\qquad (1)$$

wherein

$i$    is the Van't Hoff factor (dimensionless)
$M$    is the solute molarity (mol/L)
$R$    is the gas constant of 0.0821 L atm $K^{-1}$ $mol^{-1}$
$T$    is the thermodynamic absolute temperature (K)

The osmotic pressure of a stream with 2M HCl to pure water (at room temperature) is around 50 bar, while the osmotic pressure of a stream with 2M $H_2SO_4$ to pure water (at room temperature) is around 70 bar. Such an osmotic pressure of 50 bar corresponds to a pressure of a 500 meter high water column. This reflects that $1m^3$ volume of 2M HCl at room temperature can lift up 1 $m^3$ volume of pure water to 250 meter high.

Furthermore, the potential energy ($E_p$) within $1m^3$ of 2M HCl (roughly 1000 kg) can be calculated from the following equation:

$$E_p = mgh \qquad\qquad (2)$$

wherein

$m$    is the mass of water (kg)

$g$    is the gravitational constant 9.8 m $sec^{-1}$

$h$    is the height

Using this equation (2), the potential energy within $1m^3$ of 2M HCl, $E_{p(HC1,2M)}$, is calculated to be 2.45 MJ. Assuming the energy in $1m^3$ of 2M HCl is extracted in 1 second, the generated electricity is 2.45 MW.

In titanium oxide production industry, every 1 ton of product produces around 8 tons of 20% $H_2SO_4$ (2M), and the (potential) dilution energy is 27.44 MJ. A mid-size titanium oxide production company produces 100 000 ton product ($TiO_2$) per year and around 30 L 20% $H_2SO_4$ (waste acid) per second is expected from the production line. Therefore, the energy production by the method of the present invention can be roughly calculated around 100 KW.

**Claims**

**1.** Diffusion dialysis apparatus (15) comprising:

a plurality of anion exchange membranes (1,2) arranged so as to form a stack of successive cell units (16), each cell unit (16) comprising a dialysate compartment (4) configured for collecting acid compounds recovered from a feed, a feed compartment (5) configured for passing a stream of the feed, and two anion exchange membranes (1,2) stacked so as to be interleaved with the dialysate compartment (4) and

the feed compartment (5); **characterised in that** the apparatus comprises an anode (12) and a cathode (13); wherein the cell units (16) are placed between the anode (12) and the cathode (13) and **in that** successive anion exchange membranes (1,2) in the stack of successive cell units (16) are alternately a higher proton transport anion exchange membrane (1) and a lower proton transport anion exchange membrane (2).

2. Diffusion dialysis apparatus of claim 1, wherein the lower proton transport anion exchange membrane (2) is a proton blocking membrane.

3. Diffusion dialysis apparatus (15') comprising:

a plurality of cation exchange membranes (1',2') arranged so as to form a stack of successive cell units (16'), each cell unit (16') comprising a dialysate compartment (4') configured for collecting base compounds recovered from a feed, a feed compartment (5') configured for passing a stream of the feed, and two cation exchange membranes (1',2') stacked so as to be interleaved with the dialysate compartment (4') and the feed compartment (5');

**characterised in that** the apparatus comprises an anode (12') and a cathode (13'); wherein the cell units (16') are placed between the anode (12') and the cathode (13') and **in that** successive cation exchange membranes (1',2') in the stack of successive cell units (16') are alternately a higher hydroxyl transport cation exchange membrane (1') and

a lower hydroxyl transport cation exchange membrane (2').

4. Diffusion dialysis apparatus of claim 3, wherein the lower hydroxyl transport cation exchange membrane (2') is a hydroxyl blocking membrane

5. Diffusion dialysis apparatus of any one of claim 1 to 4, wherein the areal membrane resistance for the anion passing the anion exchange membranes (1,2), respectively the cation passing the cation exchange membranes (1',2') is lower than 10 $\Omega cm^2$.

6. Diffusion dialysis apparatus of any one of claim 1 to 5, wherein the proton transport number of the higher proton transport anion exchange membrane (1), respectively the hydroxyl transport number of the higher hydroxyl transport cation exchange membrane (1') is higher than 0.5.

7. Diffusion dialysis apparatus of any one of claim 1 to 6, wherein the proton transport number of the lower proton transport anion exchange membrane (2), respectively the hydroxyl transport number of the lower hydroxyl transport cation exchange membrane (2') is lower than 0.5.

8. Diffusion dialysis apparatus of any one of claim 1 to 7, comprising a multiple of successive cell units (16,16'), more preferably at least (about) fifty cell units (16,16'), even more preferably at least (about) one hundred cell units (16,16').

9. Use of a diffusion dialysis apparatus according to any one preceding claim, wherein the apparatus is configured for generating electrical energy over the anode (12,12') and the cathode (13, 13').

10. Use of a diffusion dialysis apparatus according to claim 9, for recovering acid compounds selected from the group of HCl, HF, $HNO_3$, $H_2SO_4$, $H_3PO_4$, and organic acids.

11. Use of a diffusion dialysis apparatus according to claim 9, for recovering base compounds selected from the group of NaOH, KOH, and $NH_4$ (OH).

12. Method for recovering acid compounds from a feed and generating electrical energy, said method comprising:

passing a feed solution comprising acid waste between two anion exchange membranes (1,2) and passing a dialysate solution at the other sides of the anion exchange membranes (1,2), wherein there is a concentration gradient of an acid between the feed solution and the dialysate solution, wherein one of the anion exchange membranes (1,2) is a higher proton transport anion exchange membrane (1) and the other one is a lower proton transport anion exchange membrane (2), such that a resulting net flow of protons is sustained through the higher proton transport anion exchange membrane (1), and providing the anion exchange membranes (1,2) in between an anode (12) and a cathode (13) to generate electrical energy from a directional migration by diffusion dialysis of protons and anions.

13. Method for recovering base compounds from a feed and generating electrical energy, said method comprising:

passing a feed solution comprising base waste between two cation exchange membranes (1',2') and passing a dialysate solution at the other sides of the cation exchange membranes (1',2'), wherein there is a concentration gradient of a base between the feed solution and the dialysate solution, wherein one of the cation exchange membranes (1',2') is a higher hydroxyl transport cation exchange membrane (1') and the other one is a lower hydroxyl transport cation exchange membrane (2'), such that a resulting net flow of hydroxyls is sustained through the higher hydroxyl transport cation exchange membrane (1'),
and providing the cation exchange membranes (1',2') in between an anode (12') and a cathode (13') to generate electrical energy from a directional migration by diffusion dialysis of hydroxyls and cations.

14. Method of claim 12 or 13, wherein the concentration of the initial feed stream (6, 6') is higher than the concentration of the initial dialysate stream (7,7') by a ratio of 1 to 0.01.

15. Method of any one of claim 12 to 14, wherein the initial feed stream (6,6') and the initial dialysate stream (7,7') are supplied to the respective inlets at a flow ratio of 0.01 to 100.

Fig. 1

Fig. 2

Fig. 3

Fig. 4

Fig. 5

## EUROPEAN SEARCH REPORT

**Application Number**

EP 13 18 2632

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S62 105922 A (TOYO SODA MFG CO LTD) 16 May 1987 (1987-05-16) * abstract * | 1 | INV. B01D61/50 B01D61/44 H01M2/14 H01M8/22 |
| X | FR 1 378 073 A (WARSZAWSKI) 13 November 1964 (1964-11-13) * the whole document * | 3-11 | |
| X | DLUGOLECKI P ET AL: "Current status of ion exchange membranes for power generation from salinity gradients", JOURNAL OF MEMBRANE SCIENCE, ELSEVIER SCIENTIFIC PUBL.COMPANY. AMSTERDAM, NL, vol. 319, no. 1-2, 1 July 2008 (2008-07-01), pages 214-222, XP022696410, ISSN: 0376-7388, DOI: 10.1016/J.MEMSCI.2008.03.037 [retrieved on 2008-03-30] * page 215 - page 220; figure 3 * | 3 | |
| X | STRATHMANN ET AL: "Electrodialysis, a mature technology with a multitude of new applications", DESALINATION, ELSEVIER, AMSTERDAM, NL, vol. 264, no. 3, 31 December 2010 (2010-12-31), pages 268-288, XP027484168, ISSN: 0011-9164, DOI: 10.1016/J.DESAL.2010.04.069 [retrieved on 2010-11-09] * page 268 - page 288; figures 2,23 * | 3 | **TECHNICAL FIELDS SEARCHED (IPC)** B01D H01M |
| A,D | WO 2012/061215 A1 (SIEMENS PTE LTD [SG]; FU RONGQIANG [SG]; NG KEE HOE [SG]) 10 May 2012 (2012-05-10) * the whole document * | 1-15 | |

-/--

The present search report has been drawn up for all claims

| Place of search | Date of completion of the search | Examiner |
|---|---|---|
| Munich | 21 November 2013 | Marti, Pedro |

Europäisches
Patentamt

European
Patent Office

Office européen
des brevets

# EUROPEAN SEARCH REPORT

Application Number

EP 13 18 2632

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROBBINS B J ET AL: "Rationalisation of the relationship between proton leakage and water flux through anion exchange membranes", JOURNAL OF MEMBRANE SCIENCE, ELSEVIER SCIENTIFIC PUBL.COMPANY. AMSTERDAM, NL, vol. 118, no. 1, 4 September 1996 (1996-09-04), pages 101-110, XP004041790, ISSN: 0376-7388, DOI: 10.1016/0376-7388(96)00095-6 * the whole document * | 1-15 | |
| A,D | EP 0 368 203 A2 (ASAHI GLASS CO LTD [JP]) 16 May 1990 (1990-05-16) * the whole document * | 1-15 | |
| | | | TECHNICAL FIELDS SEARCHED (IPC) |

The present search report has been drawn up for all claims

| Place of search | Date of completion of the search | Examiner |
|---|---|---|
| Munich | 21 November 2013 | Marti, Pedro |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 18 2632

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2013

| Patent document cited in search report | | | Publication date | Patent family member(s) | | | Publication date |
|---|---|---|---|---|---|---|---|
| JP S62105922 | A | | 16-05-1987 | NONE | | | |
| FR 1378073 | A | | 13-11-1964 | NONE | | | |
| WO 2012061215 | A1 | | 10-05-2012 | AU | 2011323707 | A1 | 04-04-2013 |
| | | | | CN | 103270636 | A | 28-08-2013 |
| | | | | EP | 2636090 | A1 | 11-09-2013 |
| | | | | SG | 180145 | A1 | 30-05-2012 |
| | | | | US | 2013288142 | A1 | 31-10-2013 |
| | | | | WO | 2012061215 | A1 | 10-05-2012 |
| EP 0368203 | A2 | | 16-05-1990 | AU | 616812 | B2 | 07-11-1991 |
| | | | | AU | 4399289 | A | 17-05-1990 |
| | | | | CA | 2002276 | A1 | 08-05-1990 |
| | | | | DE | 68914399 | D1 | 11-05-1994 |
| | | | | DE | 68914399 | T2 | 17-11-1994 |
| | | | | EP | 0368203 | A2 | 16-05-1990 |
| | | | | US | 4954262 | A | 04-09-1990 |
| | | | | US | 5062960 | A | 05-11-1991 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5062960 A
- US 4954262 A
- US 4765905 A
- US 6358484 B
- US 5843316 A
- EP 1746680 A
- US 7736791 B
- WO 2010062175 A
- US 4311771 A
- WO 2012061215 A

**Non-patent literature cited in the description**

- **LUO et al.** *Journal of Membrane Science,* 2011, vol. 366, 1-16